# EUROPEAN PATENT SPECIFICATION

(11) **EP 3 825 981 B1**
(45) Date of publication and mention of the grant of the patent: **16.08.2023**
(21) Application number: 19852821.8
(22) Date of filing: 17.07.2019
(51) Int. Cl.: G08G 1/16, B60W 40/08, B60W 50/14, B60W 50/00

(54) **WARNING APPARATUS AND DRIVING TENDENCY ANALYSIS DEVICE**
WARNEINRICHTUNG UND FAHRTENDENZANALYSEVORRICHTUNG
APPAREIL D'AVERTISSEMENT ET DISPOSITIF D'ANALYSE DE TENDANCE DE CONDUITE

(30) Priority: 24.08.2018 JP 2018157328
(43) Date of publication of application: 26.05.2021
(73) Proprietor: JVCKenwood Corporation, Yokohama-shi, Kanagawa 2210022 (JP)
(72) Inventor: TSUJI, Takao, Yokohama-shi, Kanagawa 221-0022 (JP)
(74) Representative: Klang, Alexander H.
(86) International application number: PCT/JP2019/028082
(87) International publication number: WO 2020/039801

(56) References cited:
- JP-A- 2004 034 739
- JP-A- 2012 164 040
- JP-A- 2017 146 641
- US-A1- 2004 088 095
- US-A1- 2008 042 813
- US-A1- 2014 125 474
- US-A1- 2017 247 031

## Description

### Field

The present invention relates to a warning device and a driving tendency analysis method.

### Background

There is known a technology for detecting a state of a driver of a vehicle to support safe driving of the vehicle (for example, see JP 2018-75208A). In the technology described in Patent Literature 1, a state of a driver is detected based on traveling information on the vehicle and biological information on the driver.

US 2004-088095A discloses a hazard-prevention system for a vehicle. The vehicle has devices for sensing driving state variables, for sensing ambient data and for sensing the driver's activity, and a data processing device. The data processing device is provided for processing the sensed data and for actuating a safety device in accordance with a predefined control strategy. The vehicle has a device for identifying the driver, and the data processing device derives a driver load factor related specifically to the driver from the driving state variables, the ambient data and the data relating to the activity of the driver, and said driver load factor is used to adapt the control strategy.

### Summary

### Technical Problem

In the technology described in JP 2018-75208A, an acceleration sensor and an angular velocity sensor acquire the traveling information on the vehicle. However, depending on a state of a road, such as gradient, curve, or unevenness, it may be difficult to appropriately acquire the traveling information on the vehicle on the basis of only information from the acceleration sensor and the angular velocity sensor.

The present invention has been conceived in view of the foregoing situation, and an object of the present invention is to support safe driving of a vehicle. Solution to Problem

In accordance with the present invention, a warning device, and a driving tendency analysis method as set forth in the appended claims is provided.

According to the present invention, it is possible to support safe driving of a vehicle.

### Brief Description of Drawings

FIG. 1 is a block diagram illustrating a configuration example of a warning device including a driving tendency analysis device according to a first embodiment of the invention.
FIG. 2 is a schematic diagram illustrating a line-of-sight sensor mounted in a vehicle.
FIG. 3 is a diagram illustrating an example of history information according to the first embodiment.
FIG. 4 is a diagram illustrating another example of the history information according to the first embodiment.
FIG. 5 is a diagram illustrating an example of driving tendency analysis information according to the first embodiment.
FIG. 6 is a diagram illustrating another example of the driving tendency analysis information according to the first embodiment.
FIG. 7 is a flowchart illustrating the flow of a process performed by the warning device according to the first embodiment.
FIG. 8 is a flowchart illustrating the flow of a process performed by the warning device according to the first embodiment.
FIG. 9 is a flowchart illustrating the flow of a process performed by the warning device according to the first embodiment.
FIG. 10 is a block diagram illustrating a configuration example of a warning device including a driving tendency analysis device according to a second embodiment of the invention.
FIG. 11 is a diagram illustrating an example of a notification destination of a predictive warning.
FIG. 12 is a flowchart illustrating the flow of a process performed by the warning device according to the second embodiment.
FIG. 13 is a block diagram illustrating a configuration example of a warning device including a driving tendency analysis device according to a third embodiment of the invention.

### Description of Embodiments

Embodiments of a warning device, a driving tendency analysis device, a driving tendency analysis method, and a program according to the present invention will be described in detail below with reference to the accompanying drawings. The present invention is not limited by the embodiments below.

### First Embodiment

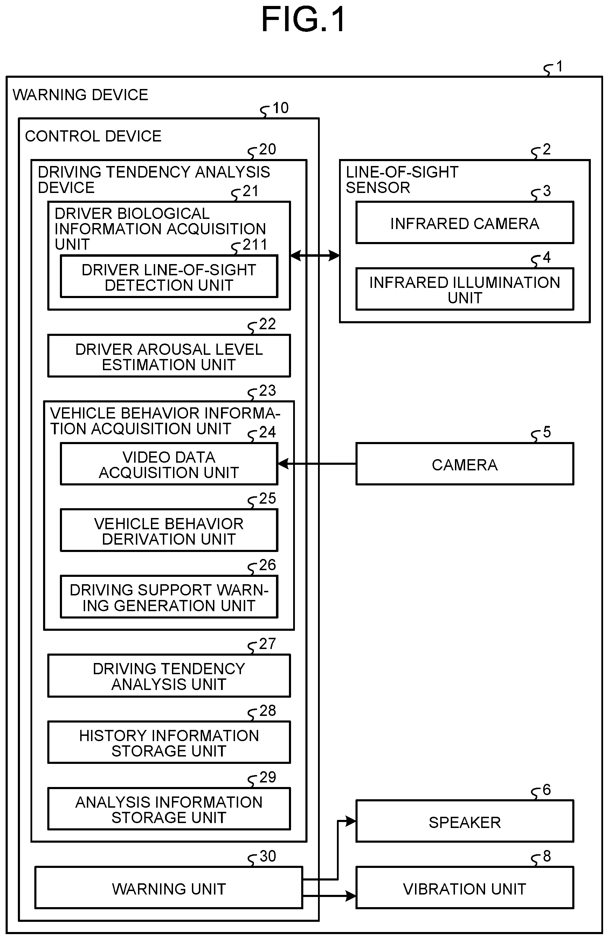

FIG. 1 is a block diagram illustrating a configuration example of a warning device including a driving tendency analysis device according to a first embodiment. A warning device 1 analyzes a driving tendency on the basis of a state of a driver and a behavior of a vehicle, and issues a predictive warning based on the driving tendency.

The state of the driver is an arousal level of the driver, which includes whether the driver is in a normal waking state or the driver is in an asleep state. The high arousal level indicates that the driver is in the normal waking state, and the low arousal level indicates that the driver is in a certain state, such as the asleep state, in which the driver is not able to drive normally. The state of the driver is estimated based on biological information on the driver.

The biological information on the driver is information used for estimating the arousal level of the driver. Examples of the biological information on the driver include line-of-sight information indicating movement of eyes, openness information indicating openness of eyes, eye-blink frequency information indicating frequency of eye blinks, head movement information indicating movement of a head, expression information indicating expression, brain wave information indicating brain waves, respiratory rate information indicating a respiratory rate, and information on a driver's body that may change in accordance with the arousal level of the driver. In the present embodiment, explanation will be given based on the assumption that the biological information on the driver is the line-of-sight information.

The behavior of the vehicle is, for example, hard braking, lane departure, front crash, preceding vehicle departure, or velocity anomaly. If the arousal level of the driver is low, the driver may be in a state as described below. In some cases, steering operation is not appropriately performed and lane departure may occur. Each driver may have a tendency that he/she is likely to deviate from either a right lane or a left lane. In some cases, situations ahead are not fully checked or brake operation is not appropriately performed, so that a subject vehicle approaches an obstacle to the extent that the vehicle is highly likely to crash into the obstacle ahead. In some cases, situations ahead are not fully checked and reaction is delayed, so that when a subject vehicle stops to wait for a traffic light or due to a traffic jam, and even if a preceding vehicle starts to move, the subject vehicle may remain stopped. In some cases, a speed sign is not fully checked or brake operation and accelerator operation are not appropriately performed, so that velocity anomaly may occur.

The warning device 1 may be a portable device that is available in the vehicle, in addition to a device that is mounted on the vehicle. The warning device 1 includes a line-of-sight sensor 2, a camera 5, a speaker 6, and a control device 10. The control device 10 that includes the line-of-sight sensor 2, the camera 5, and the speaker 6 as separate units may be adopted as the warning device 1. The control device 10 of the warning device 1 may be arranged in an external management center for the vehicle.

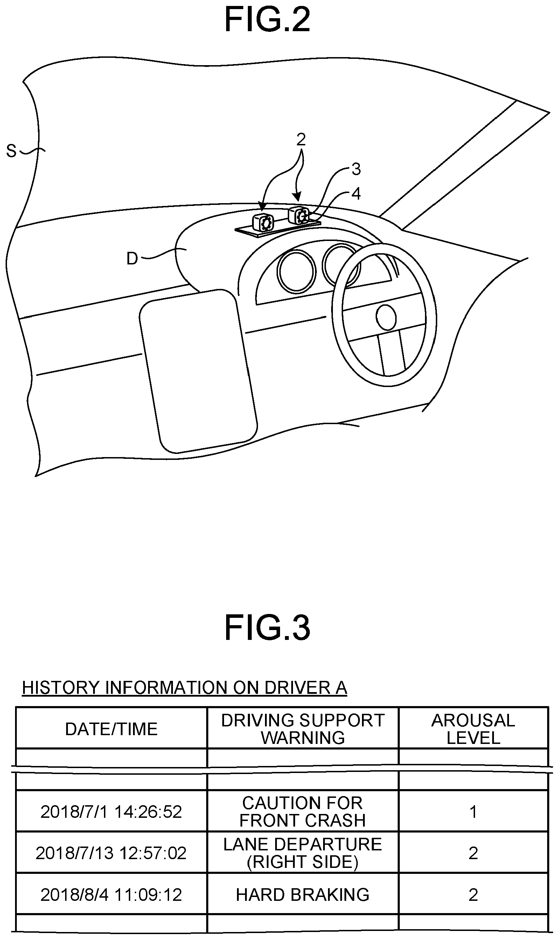

The line-of-sight sensor 2 will be described with reference to FIG. 2. FIG. 2 is a schematic diagram illustrating the line-of-sight sensor mounted in the vehicle. The line-of-sight sensor 2 detects lines of sight of a driver during a period from start to stop of operation of an engine. The line-of-sight sensor 2 is arranged so as to face a driver seat. The line-of-sight sensor 2 includes, for example, a pair of infrared cameras 3 and an infrared illumination unit 4 that includes a group of infrared LEDs. In the present embodiment, the infrared illumination unit 4 emits infrared light in a direction toward a face of the driver, and the pair of infrared cameras 3 captures a video. The line-of-sight sensor 2 detects a line of sight of the driver on the basis of positions of pupils and corneal reflex of the driver from a captured video that is captured by the infrared cameras 3. The line-of-sight sensor 2 may be configured to have a different configuration having the same functions. The line-of-sight sensor 2 outputs line-of-sight detection data, as line-of-sight information, to a driver line-of-sight detection unit 211 of a driver biological information acquisition unit 21 of a driving tendency analysis device 20. The line-of-sight sensor 2 may be configured to function as a part of the driver biological information acquisition unit 21 of the driving tendency analysis device 20. Further, the line-of-sight sensor 2 may detect a line of sight on the basis of inner corners of eyes and irises by using a visible light camera.

Referring back to FIG. 1, the camera 5 is a camera that captures a video of surroundings of the vehicle (vehicle surroundings video). In the present embodiment, explanation will be given based on the assumption that the camera 5 is a camera capable of capturing omnidirectional videos of 360°, but embodiments are not limited to this example and it may be possible to adopt a plurality of camera groups that capture videos of surroundings of the vehicle. The camera 5 is arranged on the front of the vehicle. The camera 5 continuously captures vehicle surroundings videos of surroundings of the vehicle during a period from start to stop of operation of the engine. The camera 5 outputs video data of the captured vehicle surroundings video (vehicle surroundings video data) to a video data acquisition unit 24 of a vehicle behavior information acquisition unit 23 of the driving tendency analysis device 20. The video data is a moving image including images of 30 frames per second, for example.

The speaker 6 is, for example, a voice output device specific to the warning device 1, a voice output device that is shared with other systems including a navigation system, or the like. The speaker 6 outputs warning voice on the basis of a voice signal output from a warning unit 30. The speaker 6 may be arranged for each of the driver, a passenger in a front passenger seat, and a passenger in a backseat.

The control device 10 is, for example, an arithmetic processing device (control device) that includes a central processing unit (CPU) or the like. The control device 10 loads a program stored in a storage unit (not illustrated) onto a memory, and executes commands included in the program. The control device 10 includes an internal memory (not illustrated), and the internal memory is used for temporarily storing data on the warning device 1. The control device 10 includes the driving tendency analysis device 20 and the warning unit 30.

The driving tendency analysis device 20 analyzes a driving tendency for each of drivers during a period from start to stop of operation of the engine. The driving tendency analysis device 20 includes the driver biological information acquisition unit 21, a driver arousal level estimation unit 22, the vehicle behavior information acquisition unit 23, a driving tendency analysis unit 27, a history information storage unit 28, and an analysis information storage unit 29.

The driver biological information acquisition unit 21 acquires, as the biological information on the driver, the line-of-sight information from the line-of-sight sensor 2 during a period from start to stop of operation of the engine. The driver biological information acquisition unit 21 includes the driver line-of-sight detection unit 211.

The driver line-of-sight detection unit 211 detects the line of sight of the driver on the basis of the line-of-sight detection data of the line-of-sight sensor 2, and acquires the line-of-sight information as a detection result. The driver line-of-sight detection unit 211 outputs the detection result to the driver arousal level estimation unit 22.

The driver arousal level estimation unit 22 estimates the arousal level of the driver on the basis of the biological information acquired by the driver biological information acquisition unit 21, during a period from start to stop of operation of the engine. The driver arousal level estimation unit 22 stores arousal level information indicating the estimated arousal level, as a history, in the storage unit. In the present embodiment, the driver arousal level estimation unit 22 estimates the arousal level of the driver on the basis of the detection result acquired by the driver biological information acquisition unit 21. The arousal level is estimated on a scale of 1 to 5, for example. The arousal level of "5" indicates that the driver is in a normal state. The arousal level of "1" indicates that the driver is in an asleep state or a state in which the arousal level is low and driving is affected. The arousal levels of "2", "3", and "4" are appropriately determined between "5" indicating the normal state and "1" indicating the asleep state.

For example, the driver arousal level estimation unit 22 estimates a lower arousal level with a decrease in an amount of movement of the detected line of sight, and estimates a higher arousal level with an increase in the amount of movement. As another example, the driver arousal level estimation unit 22 estimates the arousal level in the following manner. It may be possible to estimate a lower arousal level with a decrease in a moving range of the detected line of sight, and estimate a higher arousal level with an increase in the moving range. It may be possible to estimate a lower arousal level with an increase in a difference in a point of view, movement, or an amount of movement of the line of sight between the detected line of sight and a line of sight of the driver in the normal state. It may be possible to perform an image recognition process on the vehicle surroundings video data, and if an object, such as a red signal, a traffic jam, or a pedestrian, that needs to be paid attention to appears ahead, but if the line of sight of the driver does not catch the object that needs to be paid attention to, it may be possible to estimate that the arousal level is "1". If the line of sight is not accurately detected for a predetermined time or longer due to looking aside or looking down, it may be possible to estimate that the arousal level is "1".

The vehicle behavior information acquisition unit 23 acquires behavior information indicating a behavior of the vehicle during a period from start to stop of operation of the engine. The vehicle behavior information acquisition unit 23 includes the video data acquisition unit 24, a vehicle behavior derivation unit 25, and a driving support warning generation unit 26.

The video data acquisition unit 24 acquires the vehicle surroundings video data. More specifically, the video data acquisition unit 24 acquires the video data output from the camera 5, and outputs the acquired video data to the vehicle behavior derivation unit 25.

The vehicle behavior derivation unit 25 performs image processing on the video data acquired by the video data acquisition unit 24 during a period from start to stop of operation of the engine, and derives a behavior of the vehicle. For example, the vehicle behavior derivation unit 25 derives the following as the behavior of the vehicle. That is, hard braking, lane departure, front crash, preceding vehicle departure, or velocity anomaly is detected as the behavior of the vehicle. If it is detected, through the image processing on the video data, that the vehicle deviates from a lane on which the vehicle is currently traveling, lane departure is derived as the behavior of the vehicle. If, through the image processing on the video data, an inter-vehicle distance from a preceding vehicle is detected and if a state in which the inter-vehicle distance is equal to or smaller than a threshold continues for a predetermined time or longer, a high risk of front crash is derived as the behavior of the vehicle. If it is detected, through the image processing on the video data, that a vehicle stops behind a different vehicle and the vehicle remains stopped after the different vehicle ahead starts to move, preceding vehicle departure is derived as the behavior of the vehicle. If it is detected, through the image processing on the video data, that a state in which a vehicle speed of a vehicle exceeds a legal speed of the road on which the vehicle is traveling by a predetermined range or larger continues for a predetermined time or longer, velocity anomaly is derived as the behavior of the vehicle.

The vehicle behavior derivation unit 25 may acquire behavior information on the vehicle by the acceleration sensor, the angular velocity sensor, or the like of the vehicle, without using the video data acquired by the video data acquisition unit 24 or by a combination of the video data, and may determine the behavior of the vehicle by performing determination from vehicle information, such as an accelerator position, a brake depression amount, or an amount of steering operation, which is acquired via a controller area network (CAN). For example, if the vehicle behavior derivation unit 25 detects that hard braking occurs from a rapid change of acceleration or the brake depression amount, the vehicle behavior derivation unit 25 derives hard braking as the behavior of the vehicle.

If the vehicle behavior derivation unit 25 derives, as the behavior of the vehicle, hard braking, lane departure, front crash, preceding vehicle departure, or velocity anomaly, the driving support warning generation unit 26 generates driving support warning information for causing a driving support warning to occur.

The driving support warning information is voice information or video information for giving a warning to the driver by voice or video as to occurrence of, for example, hard braking, lane departure, front crash, preceding vehicle departure, or velocity anomaly. If the warning is given by voice, for example, different warning tones for different behaviors of the vehicle are output from the speaker 6. If the warning is given by video, a video in which a character or a graphic is superimposed on a captured video is displayed on, for example, a display screen that displays a video captured by the camera 5 or a display screen of the navigation system.

The driving tendency analysis unit 27 manages, as history information, a history of a driving support warning with respect to the behavior information indicating the behavior of the vehicle, in association with the arousal level of the driver on the basis of the arousal level information and the driving support warning information. Examples of the history information include an occurrence frequency and a type of a driving support warning. More specifically, when the driving support warning generation unit 26 generates the driving support warning information, the driving tendency analysis unit 27 records, as the history information for each of drivers, information including the occurrence frequency and the type of the driving support warning corresponding to the behavior information, in association with the arousal level of the driver estimated by the driver arousal level estimation unit 22, in the history information storage unit 28. The driving tendency analysis unit 27 may identify a driver by using information, such as a name or a nickname, that is input by the driver through an input unit (not illustrated), and record the information in association with the history information for each of the drivers in the history information storage unit 28. Instead of the information input by the driver, the driving tendency analysis unit 27 may identify a driver by facial recognition information based on a face image of the driver acquired by a camera (not illustrated), voice recognition (voiceprint recognition) based on voice of the driver acquired by a microphone (not illustrated), biological information recognition based on various kinds of biological information on the driver acquired by the driver biological information acquisition unit 21, or the like.

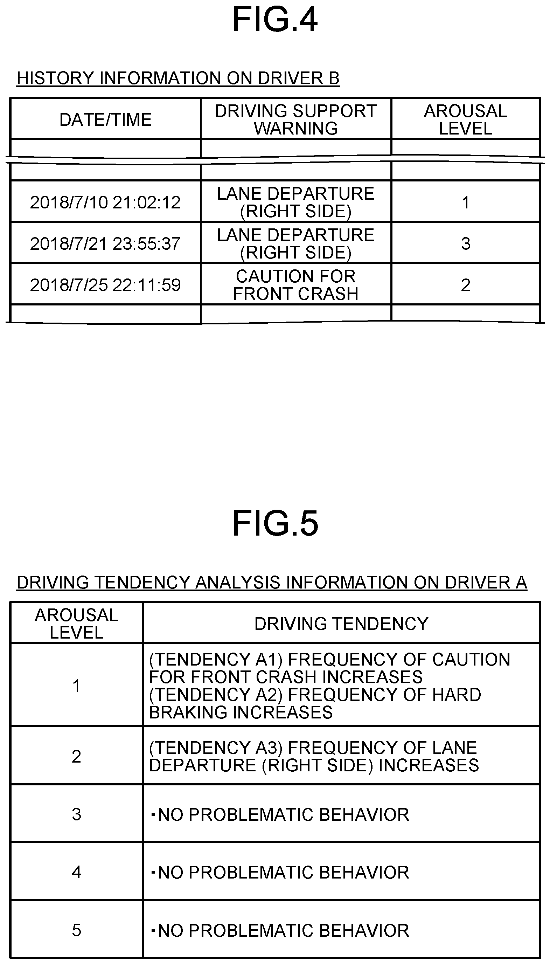

One example of the history information storage unit 28 will be described below with reference to FIG. 3 and FIG. 4. FIG. 3 is a diagram illustrating an example of the history information according to the first embodiment. FIG. 4 is a diagram illustrating another example of the history information according to the first embodiment. The history information storage unit 28 stores therein, as the history information, a date and time at which the behavior of the vehicle is derived, a type of the driving support warning, and the arousal level for each of drivers.

For example, as illustrated in FIG. 3, as for a driver A, a behavior of the vehicle is stored in association with a date and time at which the behavior is derived, in such manner that a caution for front crash occurs when the arousal level is "1", lane departure (right side) occurs when the arousal level is "2", hard braking occurs when the arousal level is "2".

For example, as illustrated in FIG. 4, as for a driver B, a behavior of the vehicle is stored in association with a date and time at which the behavior is derived, in such a manner that lane departure (right side) occurs when the arousal level is "1" and when the arousal level is "3", and a caution for front crash occurs when the arousal level was "2".

Further, the driving tendency analysis unit 27 analyzes a driving tendency for each of drivers on the basis of the history information that is stored for each of the drivers in the history information storage unit 28, and stores analysis information in the analysis information storage unit 29. The driving tendency analysis unit 27 may determine, as the driving tendency, a behavior of the vehicle for which the driving support warning is frequently issued, for each of the arousal levels. For example, the driving tendency analysis unit 27 may determine, as the driving tendency, the fact that the frequency of a caution for front crash extremely increases when the arousal level reaches a predetermined level or lower. Further, the driving tendency analysis unit 27 may determine, as the driving tendency, the fact that lane departure is likely to occur and, in particular, the vehicle is likely to deviate from a right lane when the arousal level reaches a predetermined level or lower. Moreover, the driving tendency analysis unit 27 may determine, as the driving tendency, the fact that a predetermined behavior of the vehicle increases or decreases with a change of the arousal level. Furthermore, the driving tendency analysis unit 27 may determine, as the driving tendency, the fact that occurrence of hard braking significantly increases with a decrease in the arousal level.

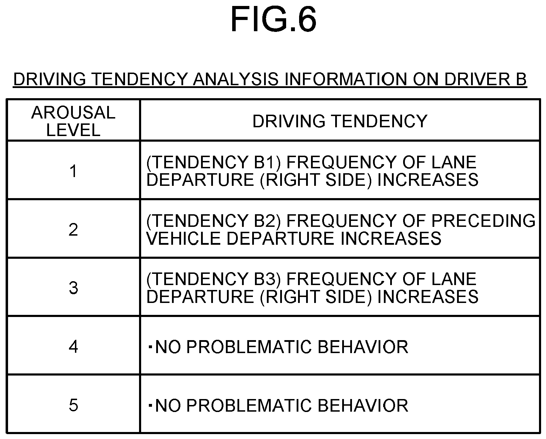

The analysis information storage unit 29 will be described below with reference to FIG. 5 and FIG. 6. FIG. 5 is a diagram illustrating an example of driving tendency analysis information according to the first embodiment. FIG. 6 is a diagram illustrating another example of the driving tendency analysis information according to the first embodiment. The analysis information storage unit 29 stores therein, as the analysis information for each of drivers, the driving tendency analyzed by the driving tendency analysis unit 27. In the present embodiment, the analysis information storage unit 29 stores therein, as the driving tendency analysis information, a behavior of the vehicle that frequently occurs at each of the arousal levels. The analysis information storage unit 29 stores therein, for each of the drivers, the arousal level of the driver and the driving tendency analysis information analyzed by the driving tendency analysis unit 27 in an associated manner.

For example, as illustrated in FIG. 5, as for the driver A, the driving tendency analysis unit 27 stores analysis information in which it is analyzed that when the arousal level is "1", (tendency A1) the frequency of a caution for front crash increases, and (tendency A2) the frequency of hard braking increases. As for the driver A, the driving tendency analysis unit 27 stores analysis information in which it is analyzed that when the arousal level is "2", (tendency A3) the frequency of lane departure (right side) increases. The driving tendency analysis unit 27 stores the analysis information that is an analysis result for the driver A in the analysis information storage unit 29.

For example, as illustrated in FIG. 6, as for the driver B, the driving tendency analysis unit 27 stores analysis information in which it is analyzed that when the arousal level is "1", (tendency B1) the frequency of lane departure (right side) increases. As for the driver B, the driving tendency analysis unit 27 stores analysis information in which it is analyzed that when the arousal level "2", (tendency B2) the frequency of preceding vehicle departure increases. As for the driver B, the driving tendency analysis unit 27 stores analysis information in which it is analyzed that when the arousal level is "3", (tendency B3) the frequency of lane departure (right side) slightly increases. The driving tendency analysis unit 27 stores the analysis information as an analysis result for the driver B in the analysis information storage unit 29.

The driving tendency analysis unit 27 performs a driving tendency analysis process as described above if an analysis execution condition is met. More specifically, the driving tendency analysis unit 27 may perform the process at predetermined time intervals. Alternatively, the driving tendency analysis unit 27 may perform the analysis process before the warning unit 30 performs a predictive warning process.

Referring back to FIG. 1, the warning unit 30 issues a warning (predictive warning) in advance, on the basis of the arousal level information estimated by the driver arousal level estimation unit 22 and the behavior information derived by the vehicle behavior derivation unit 25. More specifically, the warning unit 30 issues a predictive warning corresponding to the driving tendency for each of drivers, on the basis of the analysis information, the arousal level information, and the vehicle behavior information that are stored, for each of the drivers, in the analysis information storage unit 29. Meanwhile, each of the drivers stored in the analysis information storage unit 29 and a current driver may be associated with each other by using the same means as the means for identifying the driver by the driving tendency analysis unit 27 or by using a different means.

A predictive warning performed by the warning unit 30 will be described in detail below. First, the warning unit 30 predicts occurrence and a type of a driving support warning with respect to the behavior of the vehicle, on the basis of the analysis information and the arousal level information on the driver. Then, if it is determined that the driving support warning is highly likely to occur, the warning unit 30 issues a predictive warning to the driver on the basis of the predicted type of the driving support warning. The warning unit 30 issues the predictive warning in advance so as to prevent occurrence of the driving support warning, in other words, occurrence of a predetermined behavior of the vehicle. The warning unit 30 may output the predictive warning by vibrating a wristband including a vibration unit 8 wound around an arm of the driver. The warning unit 30 may output the predictive warning by vibrating a device (wearable device), such as a ring (smart ring), an eyeglasses (smart glasses), or a hands free microphone, that is worn on the driver, instead of the wristband.

A case will be described in detail below in which the predictive warning is issued to the driver A on the basis of the analysis information illustrated in FIG. 5. If the arousal level of the driver A is "1", the warning unit 30 predicts that a driving support warning related to a caution for front crash and hard braking is likely to occur. Then, if the arousal level of the driver A is "1", the warning unit 30 issues a predictive warning to the driver A so as to prevent occurrence of a caution for front crash and hard braking. For example, the warning unit 30 outputs, to the speaker 6, a voice signal for outputting voice of "in the asleep state, be cautious of a behavior of a vehicle ahead" to the driver A.

Furthermore, if the arousal level of the driver A is "2", the warning unit 30 predicts that a driving support warning related to lane departure (right side) is likely to occur. Then, if the arousal level of the driver A is "2", the warning unit 30 issues a predictive warning to the driver A so as to prevent occurrence of lane departure (right side). For example, the warning unit 30 outputs, to the speaker 6, a voice signal for outputting voice of "lack of concentration, be cautious of lane departure on the right side" to the driver A.

Moreover, if the arousal level of the driver A is "3" or higher, the warning unit 30 predicts that a driving support warning is less likely to occur because a problematic behavior is not observed, and does not issue a predictive warning.

A case will be described in detail below in which the predictive warning is issued to the driver B on the basis of the analysis information illustrated in FIG. 6. If the arousal level of the driver B is "1", the warning unit 30 predicts that a driving support warning related to lane departure (right side) is likely to occur. Then, if the arousal level of the driver B is "1", the warning unit 30 issues a predictive warning to the driver B so as to prevent occurrence of lane departure (right side). For example, the warning unit 30 outputs, to the speaker 6, a voice signal for outputting voice of "in the asleep state, be cautious of lane departure on the right side" to the driver B.

Furthermore, if the arousal level of the driver B is "2", the warning unit 30 predicts that a driving support warning related to preceding vehicle departure is likely to occur. Then, if the arousal level of the driver B is "2", the warning unit 30 issues a predictive warning to the driver B so as to prevent occurrence of preceding vehicle departure. For example, the warning unit 30 outputs, to the speaker 6, a voice signal for outputting voice of "checking of signals is neglected, certainly check signals" to the driver B.

Moreover, if the arousal level of the driver B is "3", the warning unit 30 predicts that a driving support warning related to lane departure (right side) is likely to occur. Then, if the arousal level of the driver B is "3", the warning unit 30 issues a predictive warning to the driver A so as to prevent occurrence of lane departure (right side). For example, the warning unit 30 outputs, to the speaker 6, a voice signal for outputting voice of "lack of concentration, be cautious of lane departure on the right side" to the driver B.

Furthermore, if the arousal level of the driver B is "4", the warning unit 30 predicts that a driving support warning is less likely to occur because a problematic behavior is not observed, and does not issue a predictive warning.

Moreover, the warning unit 30 may calculate a cycle in which the arousal level of the driver is reduced on the basis of the history of the arousal level information on the driver, and issue a predictive warning at a timing based on the cycle. For example, if the arousal level of the driver is reduced in cycles of a predetermined time, such as 5 minutes or 10 minutes, the warning unit 30 may issue a predictive warning before a lapse of the predetermined time.

The warning unit 30 performs the predictive warning process as described above if a predictive warning execution condition is met. More specifically, the warning unit 30 may perform the process if the arousal level reaches a predetermined level or lower or if a behavior of the vehicle that is included in a driving tendency corresponding to a low arousal level is derived. Alternatively, the warning unit 30 may perform the process at predetermined time intervals. Still alternatively, the warning unit 30 may perform the process if a predetermined condition in which the arousal level is likely to decrease is met. The predetermined condition in which the arousal level is likely to decrease is, for example, a condition in which a vehicle keeps travelling on a road with no signals at a predetermined speed or higher, for a predetermined time or longer, or for a predetermined distance or longer. Alternatively, the predetermined condition in which the arousal level is likely to decrease is, for example, a condition in which various kinds of operation including steering operation, brake operation, gear operation, air conditioning operation, or audio operation on the vehicle performed by the driver is not detected for a predetermined time or longer.

Furthermore, after the warning unit 30 has issued the predictive warning based on the driving tendency corresponding to the arousal level of the driver, if the arousal level is not improved, the warning unit 30 may output a voice signal for outputting the warning at an increased volume to the speaker 6.

Moreover, after the warning unit 30 has issued the predictive warning based on the driving tendency corresponding to the arousal level of the driver, if the arousal level is not improved, the warning unit 30 may determine that the arousal level is highly likely to further decrease, and issue a predictive warning corresponding to a lower arousal level. For example, after the driver arousal level estimation unit 22 has estimated that the arousal level of the driver A is "2" and issued a predictive warning, if the arousal level is not improved, the warning unit 30 may acquire driving tendency analysis information corresponding to the arousal level of "1" for the driver A on the basis of the analysis information storage unit 29, and issue a predictive warning corresponding to the arousal level of "1".

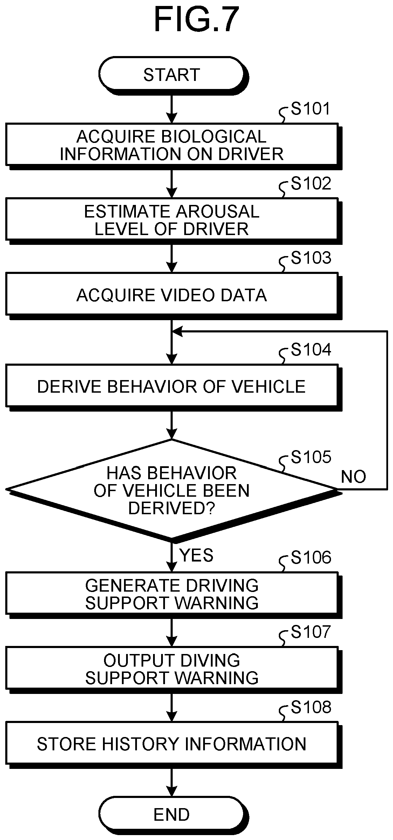

The flow of a process of deriving a behavior of the vehicle by the driving tendency analysis device 20 of the warning device 1 will be described below with reference to FIG. 7. FIG. 7 is a flowchart illustrating the flow of the process performed by the warning device according to the first embodiment. The line-of-sight sensor 2 detects a line of sight of a driver while the warning device 1 is active. The camera 5 captures a vehicle surroundings video while the warning device 1 is active. The driving tendency analysis device 20 detects a behavior of the vehicle while the warning device 1 is active.

The warning device 1 acquires biological information on a driver (Step S101). More specifically, the warning device 1 causes the driver line-of-sight detection unit 211 of the driver biological information acquisition unit 21 to acquire line-of-sight detection data output by the line-of-sight sensor 2. Then, the warning device 1 causes the driver line-of-sight detection unit 211 to acquire, as a detection result, line-of-sight information based on the line-of-sight detection data. The warning device 1 proceeds to Step S102.

The warning device 1 estimates an arousal level of the driver (Step S102). For example, the warning device 1 estimates that the arousal level decreases with a decrease in an amount of movement of the detected line of sight and estimates that the arousal level increases with an increase in the amount of movement, on the basis of the detection result obtained at Step S101. The warning device 1 proceeds to Step S103.

The warning device 1 acquires video data (Step S103). More specifically, the warning device 1 causes the video data acquisition unit 24 to acquire video data of the vehicle surroundings video captured by the camera 5. The warning device 1 proceeds to Step S104.

The warning device 1 derives a behavior of the vehicle (Step S104). More specifically, the warning device 1 causes the vehicle behavior derivation unit 25 to perform image processing on the video data acquired by the video data acquisition unit 24, and detects, as the behavior of the vehicle, hard braking, lane departure, front crash, preceding vehicle departure, or velocity anomaly, for example. The warning device 1 proceeds to Step S105. Meanwhile, as for the process at Step S104, it may be possible to detect, at the same time of deriving the behavior of the vehicle at Step S105 to be described later, the behavior of the vehicle by an acceleration sensor or the like without using the video data acquired by the video data acquisition unit 24 or by a combination of the video data.

The warning device 1 determines whether the behavior of the vehicle has been derived (Step S105). If the vehicle behavior derivation unit 25 has derived the behavior of the vehicle (Yes at Step S105), the warning device 1 proceeds to Step S106. If the vehicle behavior derivation unit 25 has not derived the behavior of the vehicle (No at Step S105), the warning device 1 performs the process at Step S104 again.

If the behavior of the vehicle has been derived (Yes at Step S105), the warning device 1 generates a driving support warning (Step S106). More specifically, the warning device 1 causes the driving support warning generation unit 26 to generate driving support warning information for notifying the driver of a driving support warning. The warning device 1 proceeds to Step S107.

The warning device 1 outputs the driving support warning based on the driving support warning information generated by the driving support warning generation unit 26 (Step S107). More specifically, the warning device 1 outputs different warning tones for different behaviors of the vehicle from the speaker 6. The warning device 1 proceeds to Step S108.

The warning device 1 stores history information (Step S108). More specifically, the warning device 1 causes the vehicle behavior information acquisition unit 23 to store, as the history information for each of drivers, the behavior information indicating the derived behavior of the vehicle and the arousal level of the driver estimated by the driver arousal level estimation unit 22 in the history information storage unit 28 in an associated manner.

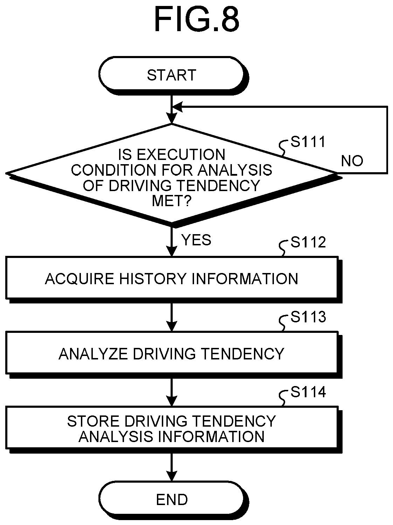

The flow of a predictive warning process performed by the warning device 1 will be described below with reference to FIG. 8. FIG. 8 is a flowchart illustrating the flow of the process performed by the warning device according to the first embodiment.

The warning device 1 determines whether an execution condition for analysis of a driving tendency is met (Step Sill). For example, the warning device 1 determines that the execution condition is met at predetermined intervals or every time the predictive warning process is performed, for example (Yes at Step Sill), and proceeds to Step S112. If all of the above-described conditions are not met, the warning device 1 determines that the execution condition is not met (No at Step Sill), and performs the process at Step Sill again.

The warning device 1 acquires the history information (Step S112). More specifically, the warning device 1 causes the driving tendency analysis unit 27 to acquire the history information from the history information storage unit 28. The warning device 1 proceeds to Step S113.

The warning device 1 analyzes a driving tendency (Step S113). More specifically, the warning device 1 causes the driving tendency analysis unit 27 to analyze a driving tendency for each of the drives on the basis of the history information on each of the drivers. The warning device 1 proceeds to Step S114.

The warning device 1 stores driving tendency analysis information (Step S114). More specifically, the warning device 1 causes the driving tendency analysis unit 27 to store the driving tendency analysis information on each of the drivers in the analysis information storage unit 29.

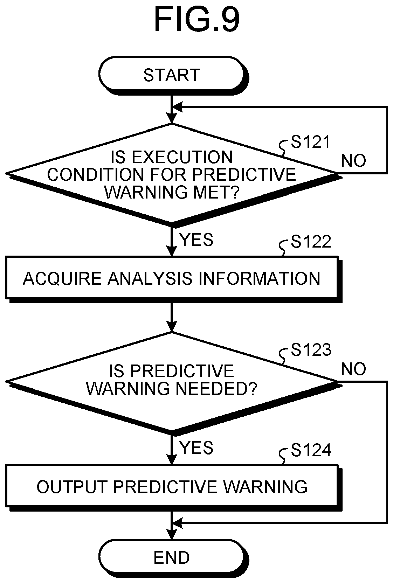

The flow of the predictive warning process performed by the warning device 1 will be described below with reference to FIG. 9. FIG. 9 is a flowchart illustrating the flow of the process performed by the warning device according to the first embodiment.

The warning device 1 determines whether an execution condition for a predictive warning is met (Step S121). For example, the warning device 1 determines that the execution condition is met if the arousal level reaches a predetermined level or lower, if the behavior of the vehicle is derived, at predetermined time intervals, or if it is determined that the arousal level is likely to decrease (Yes at Step S121), and proceeds to Step S122. If all of the above-described conditions are not met, the warning device 1 determines that the execution condition is not met (No at Step S121), and performs the process at Step S121 again.

The warning device 1 acquires the analysis information stored in the analysis information storage unit 29 (Step S122). The warning device 1 proceeds to Step S123.

The warning device 1 determines whether a predictive warning is needed (Step S123). More specifically, the warning device 1 determines that the predictive warning is needed if it is determined that a driving support warning is highly likely to occur at a current arousal level of the driver. The warning device 1 determines that the predictive warning is not needed if the driving tendency indicated as the analysis information indicates "there is no problematic behavior" at the current arousal level of the driver. If the warning unit 30 determines that the predictive warning is needed in accordance with the driving tendency analysis information on each of the drivers (Yes at Step S123), the warning device 1 proceeds to Step S124. If the warning unit 30 determines that the predictive warning is not needed in accordance with the driving tendency analysis information on each of the drivers (No at Step S123), the warning device 1 terminates the process.

If it is determined that the predictive warning is needed (Yes at Step S123), the warning device 1 outputs the predictive warning (Step S124). More specifically, the warning device 1 causes the warning unit 30 to acquire the driving tendency analysis information corresponding to the arousal level of the driver based on the analysis information storage unit 29, and issues a corresponding predictive warning.

In this manner, the warning device 1 acquires the driving tendency analysis information in which a tendency exhibited by the arousal level and the behavior of the vehicle for each of the drivers. If the warning device 1 determines that the driving support warning is highly likely to occur for each of the drivers on the basis of the arousal level information and the vehicle behavior information, the warning device 1 issues a predictive warning with respect to a vehicle behavior that is predicted in accordance with the driving tendency analysis information.

As described above, in the present embodiment, the driving tendency analysis information in which the tendency of the arousal level and the behavior of the vehicle is analyzed is acquired for each of the drivers. In the present embodiment, if it is determined that the driving support warning is highly likely to occur due to reduction of the arousal level for each of the drivers on the basis of the arousal level information, the vehicle behavior information, and the analysis information, it is possible to issue a predictive warning based on the behavior of the vehicle that is predicted in accordance with the driving tendency analysis information associated with the arousal level. According to the present embodiment, it is possible to prevent occurrence of a driving support warning with use of a predictive warning, in other words, it is possible to issue a predictive warning in order to prevent occurrence of a predetermined behavior of the vehicle, so that it is possible to support safe driving of the vehicle.

In the present embodiment, it is possible to issue a predictive warning based on the arousal level information, the vehicle behavior information, and the analysis information, so that it is possible to prevent various kinds of information from being erroneously detected due to a road condition, and it is possible to reduce the possibility that a predictive warning is erroneously issued.

In the present embodiment, it is possible to detect a line of sight with high accuracy by using the line-of-sight sensor 2, and, in the present embodiment, it is possible to estimate the arousal level of the driver with high accuracy.

In the present embodiment, it is possible to analyze the behavior of the vehicle in a state in which the arousal level is reduced for each of the drivers and acquire the analysis information, so that it is possible to more accurately recognize the behavior of the vehicle in the state in which the arousal level is reduced for each of the drivers by using the analysis information. In addition, in the present embodiment, by storing the analysis information in the analysis information storage unit 29, it is possible to manage the analysis information as a traveling record or a running record.

### Second Embodiment

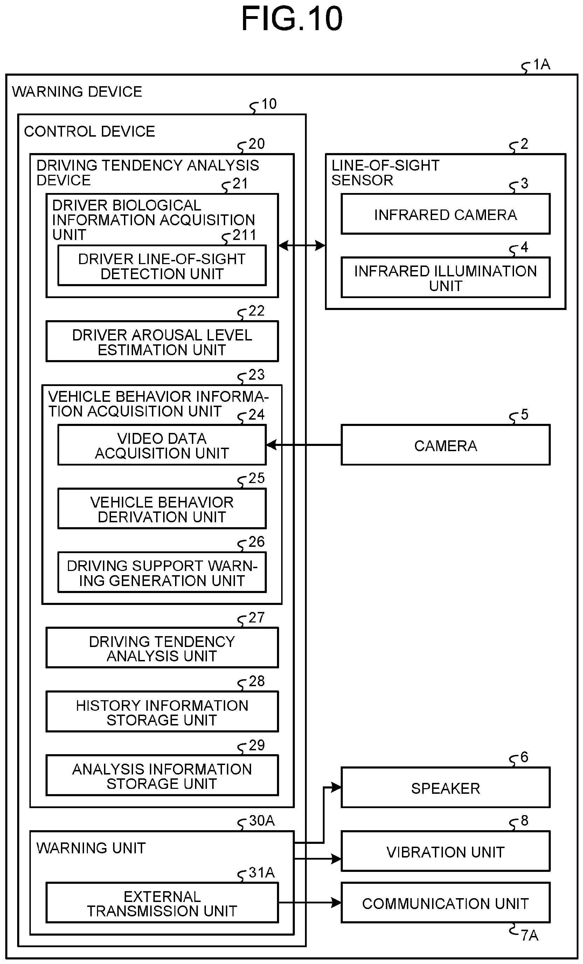

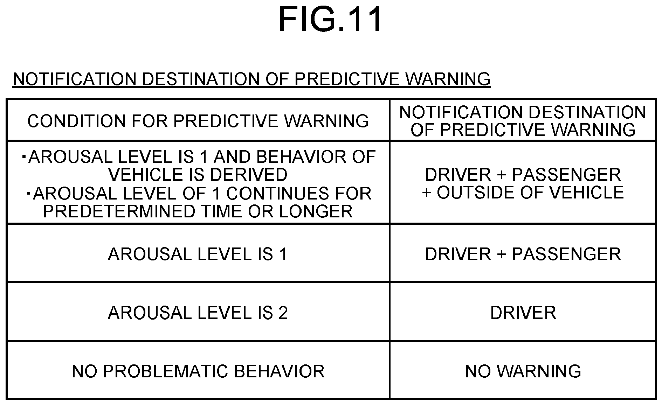

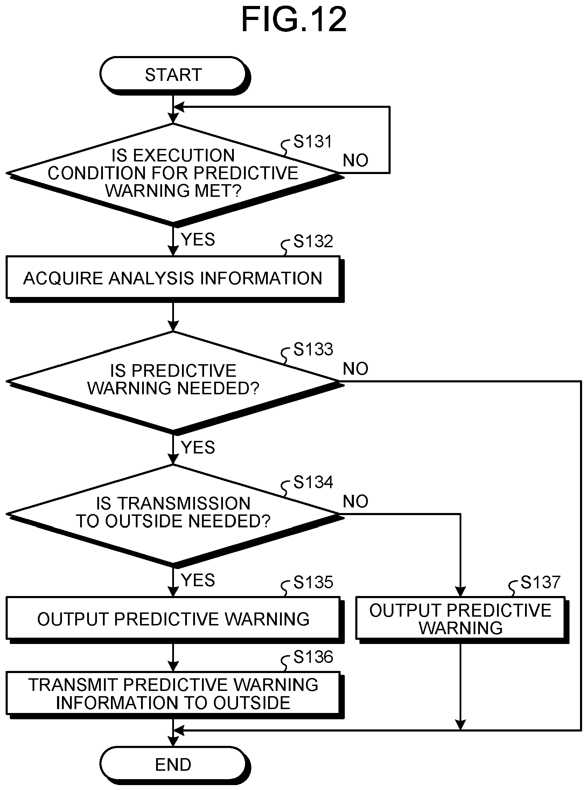

A warning device 1A according to a second embodiment will be described with reference to FIG. 10 to FIG. 12. FIG. 10 is a block diagram illustrating a configuration example of the warning device including a driving tendency analysis device according to the second embodiment. FIG. 11 is a diagram illustrating an example of a notification destination of a predictive warning. FIG. 12 is a flowchart illustrating the flow of a process performed by the warning device according to the second embodiment. A basic configuration of the warning device 1A is the same as the warning device 1 of the first embodiment. In the following description, the same structural elements as those of the warning device 1 will be denoted by the same or corresponding reference symbols, and detailed explanation thereof will be omitted. The warning device 1A is different from the first embodiment in that the warning device 1A includes a communication unit 7A, and a warning unit 30A includes an external transmission unit 31A.

The communication unit 7A performs information communication with an external device in a wired or a wireless manner. The communication unit 7A transmits and receives predictive warning information for causing a predictive warning to occur, video data, or the like to and from an external server device, for example. The communication unit 7A may perform communication using any method, such as the Internet, a mobile phone line, inter-vehicle communication, or road-to-vehicle communication. Further, the communication unit 7A may perform communication with an information communication terminal, and may transmit and receive data to and from an external server device via the information communication terminal.

The external transmission unit 31A transmits predictive warning information including arousal level information on a driver and a predicted driving support warning to outside of the vehicle or to an information communication terminal owned by a passenger in the vehicle via the communication unit 7A. The external transmission unit 31A determines a transmission frequency on the basis of the arousal level information on the driver.

The external transmission unit 31A may add a certain destination outside the vehicle to the notification destination when a predetermined condition for external transmission is met, where the predetermined condition includes the arousal level. For example, if the arousal level is low, the external transmission unit 31A may transmit the predictive warning information to a server device of an external management center via the communication unit 7A, in addition to output of the predictive warning to the driver by the warning unit 30A. For example, after a predictive warning based on the driving tendency corresponding to the arousal level of the driver has been issued, if a predetermined behavior of the vehicle is observed or if the arousal level is not improved, the external transmission unit 31A may transmit the predictive warning information to the server device of the external management center via the communication unit 7A, in addition to output of the predictive warning to the driver by the warning unit 30A.

The notification destination of the predictive warning for a driver A will be described in detail below with reference to FIG. 11. For example, if the arousal level is "2", the warning unit 30A outputs voice of a predictive warning corresponding to the arousal level of "2" from the speaker 6 on the driver side. For example, if the arousal level is "1", the warning unit 30A outputs voice of the predictive warning corresponding to the arousal level of "1" from the speakers 6 on the driver side and on the passenger side. For example, after the predictive warning corresponding to the arousal level of "1" has been issued to the driver, and if a behavior of the vehicle, such as a caution for front crash or hard braking, is derived, it may be possible to determine that the predetermined condition for external transmission is met. In this case, the external transmission unit 31A transmits the predictive warning information to the outside of the vehicle, such as a server device in a management center of a company to which the driver belongs or a management center of an insurance company, via the communication unit 7A, in addition to output of voice of the predictive warning from the speaker 6 to the driver by the warning unit 30A. For example, if the arousal level of "1" continues for a predetermined time or longer, it may be possible to determine that the predetermined condition for external transmission is met. In this case, the external transmission unit 31A transmits the predictive warning information to the outside of the vehicle, such as a server device in a management center of a company to which the driver belongs or a management center of an insurance company, via the communication unit 7A, in addition to output of voice of the predictive warning from the speaker 6 to the driver by the warning unit 30A.

The flow of a predictive warning process performed by the warning device 1A will be described below with reference to FIG. 12. Processes from Step S131 to Step S133 and Step S137 are the same as the processes at Step S121 to Step S123 and Step S124 in the flowchart illustrated in FIG. 9.

The warning device 1A determines whether transmission of the predictive warning information to the outside is needed (Step S134). More specifically, if the predetermined condition for external transmission is met, for example, if the arousal level is "1", the warning device 1A determines that the transmission of the predictive warning information to the outside by the external transmission unit 31A is needed in addition to issuance of the predictive warning to the driver by the warning unit 30A (Yes at Step S134), and proceeds to Step S135. If the predetermined condition for external transmission is not met, for example, if the arousal level is "2" or higher, the warning device 1A determines that the transmission of the predictive warning information to the outside is not needed (No at Step S134), and proceeds to Step S137.

If it is determined that the transmission of the predictive warning information to the outside is needed (Yes at Step S134), the warning device 1A causes the warning unit 30A to output the predictive warning to the driver (Step S135). The process at Step S135 is the same as the process at Step S124 in the flowchart illustrated in FIG. 9. The warning device 1A proceeds to Step S136.

The warning device 1A causes the external transmission unit 31A to transmit the predictive warning information to an external server device via the communication unit 7A (Step S136).

In this manner, when the predictive warning is to be output, and if the predetermined condition for external transmission is met, the external transmission unit 31A transmits the predictive warning information to the outside of the vehicle, such as a server device in a management center of a company to which the driver belongs or a management center of an insurance company, via the communication unit 7A.

As described above, in the present embodiment, when the predictive warning is to be output, and if the predetermined condition for external transmission is met, the external transmission unit 31A is able to transmit the predictive warning information to the outside of the vehicle, such as a server device in a management center of a company to which the driver belongs or a management center of an insurance company, via the communication unit 7A. In this manner, according to the present embodiment, it is possible to support safe driving of the vehicle.

In the present embodiment, in a company to which a driver belongs, it is possible to appropriately recognize a state in which the arousal level is reduced and a state in which a predictive warning is issued, for each of drivers. According to the present embodiment, the company to which the driver belongs is able to take an appropriate action for each of drivers.

### Third Embodiment

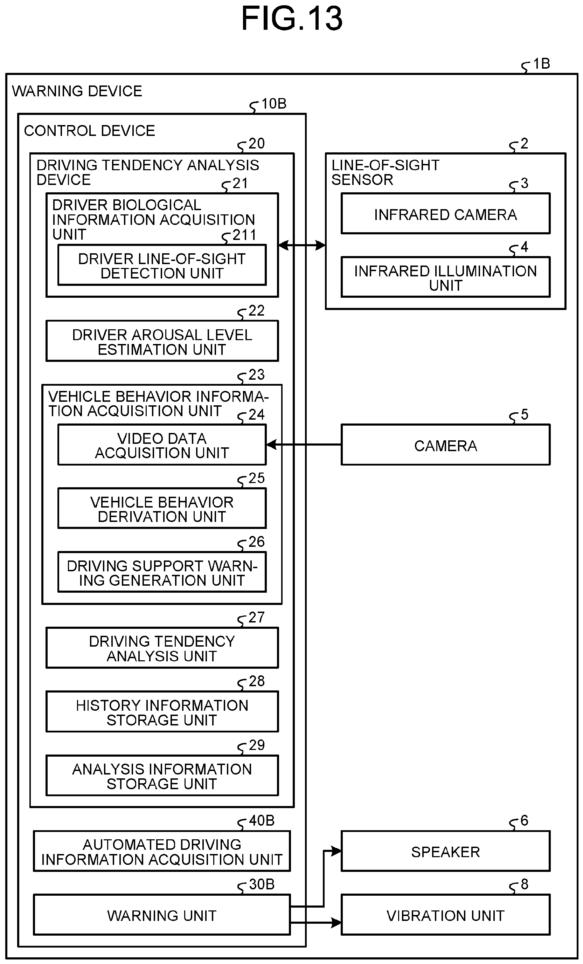

A warning device 1B according to a third embodiment will be described with reference to FIG. 13. FIG. 13 is a block diagram illustrating a configuration example of the warning device including a driving tendency analysis device according to the third embodiment. A basic configuration of the warning device 1B is the same as the warning device 1 of the first embodiment. The warning device 1B is different from the first embodiment in that a control device 10B includes an automated driving information acquisition unit 40B, and a warning unit 30B performs a different process.

The automated driving information acquisition unit 40B acquires, via a CAN, automated driving information indicating whether a vehicle is performing automated driving or specific driving support, such as adaptive cruise control (ACC) or lane keeping assistance system (LKAS). The automated driving information acquisition unit 40B outputs the acquired automated driving information to the warning unit 30B.

If the automated driving information indicates that the automated driving or the specific driving support is being performed, the warning unit 30B periodically issues a predictive warning independent of the arousal level of the driver, on the basis of a type of a driving support warning that is predicted for each of drivers. By periodically issuing the predictive warning corresponding to a driving tendency for each of the drivers, it is possible to enable the driver to maintain concentration and prepare for shift to manual driving.

As described above, in the present embodiment, even when the automated driving information indicates that the automated driving or the specific driving support is being performed, it is possible to periodically issue a predictive warning on the basis of a type of a predicted driving support warning.

While the warning device 1 (1A and 1B) according to the present invention has been described above, the present invention may be embodied in various different modes other than the embodiments as described above.

The structural elements of the warning device 1 illustrated in the drawings are functionally conceptual and need not necessarily be configured in the manner illustrated in the drawings. In other words, specific forms of each of the devices are not limited to those illustrated in the drawings, and all or part of the devices may be functionally or physically distributed or integrated in arbitrary units depending on processing loads or use conditions.

For example, the camera 5 and the vehicle behavior information acquisition unit 23 may be mounted, as a drive recorder that captures videos of surroundings of a vehicle and records the videos, on the vehicle.

The configuration of the warning device 1 is realized as, for example, software by a program or the like loaded on a memory. In the embodiments as described above, functional blocks that are implemented by cooperation of hardware or software have been described. In other words, functional blocks that are implemented by cooperation of hardware or software have been described. In other words, the functional blocks may be implemented in various forms by only hardware, only software, or a combination of hardware and software.

The structural elements described above include one that can be easily thought of by a person skilled in the art and one that is practically identical. Furthermore, within the scope as defined in the appended claims, various omission, replacement, and modifications of the structural elements may be made.

While it is explained that the biological information on the driver is the line-of-sight information, embodiments are not limited to this example. For example, it may be possible to cause a driver to wear a biological sensor, acquire brain wave information indicating brain waves and respiratory rate information indicating a respiratory rate, and estimate an arousal level. In this manner, it is possible to estimate the arousal level of the driver on the basis of various kinds of biological information on the driver.

The warning unit 30 may change a timing to output a predictive warning in accordance with a type of a predicted driving support warning. For example, if the predicted driving support warning is preceding vehicle departure, the warning unit 30 outputs a predictive warning when the vehicle stops at a signal. For example, if the predicted driving support warning is lane departure, the warning unit 30 outputs a predictive warning when a vehicle is traveling on a road on which lane departure is likely to occur or a road on which lane departure has frequently occurred. With this configuration, it is possible to effectively issue a predictive warning. At step S123 in the flowchart illustrated in FIG. 9, even when it is determined that the predictive warning is not needed, if the arousal level tends to decrease, the warning unit 30 may output a predictive warning. With this configuration, it is possible to issue a predictive warning in advance in order to prevent occurrence of a driving support warning.

If there is a change from a normal arousal level or if there is a difference from a normal behavior of a vehicle on the basis of at least one of the arousal level information and the history information on the behavior of the vehicle, the warning unit 30 may notify a driver of the change or the difference as a today's tendency, in addition to or independent of the predictive warning. With this configuration, it is possible to support safe driving of the vehicle.

While it is explained that the warning unit 30 outputs a predictive warning by voice form the speaker 6, embodiments are not limited to this example. For example, the warning unit 30 may output a predictive warning by vibrating a wristband that includes the vibration unit 8 and that is wound around an arm of a driver. The warning unit 30 may output the predictive warning by vibrating a device (wearable device), such as a ring (smart ring), an eyeglasses (smart glasses), or a hands free microphone, that is worn on the driver, instead of the wristband. With this configuration, it is possible to effectively issue a predictive warning.

### Reference Signs List

- 1: warning device
- 2: line-of-sight sensor
- 3: infrared camera
- 4: infrared illumination unit
- 5: camera
- 6: speaker
- 8: vibration unit
- 10: control device
- 20: driving tendency analysis device
- 21: driver biological information acquisition unit
- 211: driver line-of-sight detection unit
- 22: driver arousal level estimation unit
- 23: vehicle behavior information acquisition unit
- 24: video data acquisition unit
- 25: vehicle behavior derivation unit
- 26: driving support warning generation unit
- 27: driving tendency analysis unit
- 28: history information storage unit
- 29: analysis information storage unit
- 30: warning unit

## Claims

1. A warning device (1; 1A; 1B) comprising:
a driver biological information acquisition unit (21) configured to acquire biological information on a driver;
a driver arousal level estimation unit (22) configured to estimate an arousal level of the driver on the basis of the biological information;
a vehicle behavior information acquisition unit (23) configured to acquire behavior information indicating a behavior of a vehicle; and
a warning unit (30; 30A; 30B) configured to issue a warning based on arousal level information indicating the arousal level and the behavior information, wherein
the vehicle behavior information acquisition unit (23) further includes a driving support warning generation unit (26) configured to generate driving support warning information for causing a driving support warning to occur on the basis of the behavior information,
the warning device (1; 1A; 1B) further comprises a driving tendency analysis unit (27) configured to
manage, as history information, a history of a driving support warning with respect to the behavior information in association with the arousal level of the driver, on the basis of the arousal level information and the driving support warning information, and
analyze a driving tendency of the driver on the basis of the history information to acquire analysis information, and
the warning unit (30; 30A; 30B) issues a warning corresponding to the driving tendency on the basis of the analysis information.

2. The warning device (1; 1A; 1B) according to claim 1, wherein the warning unit (30; 30A; 30B) predicts a possibility that a driving support warning with respect to the behavior of the vehicle occurs and a type of the driving support warning that occurs, on the basis of the analysis information and the arousal level information on the driver, and when it is determined that the driving support warning is highly likely to occur, the warning unit (30; 30A; 30B) issues a warning to the driver on the basis of the predicted type of the driving support warning.

3. The warning device (1A) according to claims 1 or 2, further comprising:
a communication unit (7A) configured to perform communication with an external terminal, wherein
the warning unit (30A) further includes an external transmission unit (31A) configured to transmit the arousal level information on the driver and predictive warning information indicating a predicted driving support warning to outside via the communication unit (7A), and
the external transmission unit (31A) determines a transmission frequency on the basis of the arousal level information on the driver.

4. The warning device (1; 1A; 1B) according to any one of claims 1 to 3, further comprising:
an infrared illumination unit (4) configured to emit infrared light to a driver, wherein
the driver biological information acquisition unit (21) further includes a driver line-of-sight detection unit (211) configured to detect a line of sight of the driver.

5. The warning device (1; 1A; 1B) according to any one of claims 1 to 4, wherein the warning unit (30; 30A; 30B) calculates a cycle in which an arousal level is reduced on the basis of a history of the arousal level information on the driver, and issues a warning at a timing based on the cycle.

6. The warning device (1B) according to any one of claims 1 to 5, further comprising:
an automated driving information acquisition unit (40B) configured to acquire automated driving information indicating whether the vehicle is performing one of automated driving and specific driving support, wherein
when the automated driving information indicates that one of the automated driving and the specific driving support is being performed, the warning unit (30B) periodically issues a warning on the basis of a predicted type of the driving support warning.

7. A driving tendency analysis method comprising:
a biological information acquisition step of acquiring biological information on a driver;
a driver arousal level estimation step of estimating an arousal level of the driver on the basis of the biological information;
a vehicle behavior derivation step of deriving behavior information indicating a behavior of a vehicle;
a driving support warning generation step of generating driving support warning information for causing a driving support warning to occur on the basis of the behavior information; and
a driving tendency analysis step of
managing, as history information, a history of a driving support warning with respect to the behavior information in association with the arousal level of the driver, on the basis of the arousal level information and the driving support warning information, and
analyzing a driving tendency of the driver on the basis of the history information t to acquire analysis information.

## Patentansprüche

1. Warnvorrichtung (1; 1A; 1B), aufweisend:
eine Einheit (21) zum Erfassen von biologischen Informationen über einen Fahrer, die konfiguriert ist zum Erfassen von biologischen Informationen über einen Fahrer;
eine Einheit (22) zum Schätzen eines Erregungspegels eines Fahrers, die konfiguriert ist zum Schätzen eines Erregungspegels des Fahrers basierend auf den biologischen Informationen;
eine Einheit (23) zum Erfassen von Informationen über ein Fahrzeugverhalten, die konfiguriert ist zum Erfassen von Verhaltensinformationen, die ein Verhalten eines Fahrzeugs anzeigen; und
eine Warneinheit (30; 30A; 30B), die konfiguriert ist zum Ausgeben einer Warnung basierend auf Informationen über einen Erregungspegel, die den Erregungspegel und die Verhaltensinformationen anzeigen, wobei
die Einheit (23) zum Erfassen von Informationen über ein Fahrzeugverhalten ferner eine Einheit (26) zum Erzeugen einer Fahrunterstützungswarnung aufweist, die konfiguriert ist zum Erzeugen von Informationen über eine Fahrunterstützungswarnung, um zu veranlassen, dass eine Fahrunterstützungswarnung auftritt, basierend auf den Verhaltensinformationen,
die Warnvorrichtung (1; 1A; 1B) ferner eine Einheit (27) zum Analysieren einer Fahrtendenz aufweist, die konfiguriert ist zum
Verwalten, als Verlaufsinformationen, eines Verlaufs einer Fahrunterstützungswarnung in Bezug auf die Verhaltensinformationen in Verbindung mit dem Erregungspegel des Fahrers, basierend auf den Informationen über den Erregungspegel und den Informationen über die Fahrunterstützungswarnung, und
Analysieren einer Fahrtendenz des Fahrers basierend auf den Verlaufsinformationen zum Erfassen von Analyseinformationen, und
die Warneinheit (30; 30A; 30B) eine Warnung ausgibt, die der Fahrtendenz entspricht, basierend auf den Analyseinformationen.

2. Warnvorrichtung (1; 1A; 1B) nach Anspruch 1, wobei die Warneinheit (30; 30A; 30B) eine Wahrscheinlichkeit vorhersagt, dass eine Fahrunterstützungswarnung in Bezug auf das Verhalten des Fahrzeugs auftritt, und eine Art der Fahrunterstützungswarnung, die auftritt, basierend auf den Analyseinformationen und den Informationen über den Erregungspegel des Fahrers, und wenn bestimmt wird, dass die Fahrunterstützungswarnung mit hoher Wahrscheinlichkeit auftritt, die Warneinheit (30; 30A; 30B) eine Warnung an den Fahrer ausgibt, basierend auf der vorhergesagten Art der Fahrunterstützungswarnung.

3. Warnvorrichtung (1A) nach Anspruch 1 oder 2, ferner aufweisend:
eine Kommunikationseinheit (7A), die konfiguriert ist zum Durchführen einer Kommunikation mit einem externen Terminal, wobei
die Warneinheit (30A) ferner eine externe Übertragungseinheit (31A) aufweist, die konfiguriert ist zum Übertragen der Informationen über den Erregungspegel des Fahrers und von prädiktiven Warninformationen, die eine vorhergesagte Fahrunterstützungswarnung nach außen über die Kommunikationseinheit (7A) anzeigen, und
die externe Übertragungseinheit (31A) eine Übertragungsfrequenz basierend auf den Informationen über den Erregungspegel des Fahrers bestimmt.

4. Warnvorrichtung (1; 1A; 1B) nach einem der Ansprüche 1 bis 3, ferner aufweisend:
eine Infrarotbeleuchtungseinheit (4), die konfiguriert ist zum Emittieren von Infrarotlicht an einen Fahrer, wobei
die Einheit (21) zum Erfassen von biologischen Informationen über einen Fahrer ferner eine Einheit (211) zum Erfassen einer Sichtlinie des Fahrers aufweist, die konfiguriert ist zum Erfassen einer Sichtlinie des Fahrers.

5. Warnvorrichtung (1; 1A; 1B) nach einem der Ansprüche 1 bis 4, wobei die Warneinheit (30; 30A; 30B) einen Zyklus berechnet, in dem ein Erregungspegel reduziert ist, basierend auf einem Verlauf der Informationen über den Erregungspegel des Fahrers, und eine Warnung zu einem Zeitpunkt basierend auf dem Zyklus ausgibt.

6. Warnvorrichtung (1B) nach einem der Ansprüche 1 bis 5, ferner aufweisend:
eine Einheit (40B) zum Erfassen von Informationen über ein automatisiertes Fahren, die konfiguriert ist zum Erfassen von Informationen über ein automatisiertes Fahren, die anzeigen, ob das Fahrzeug ein automatisiertes Fahren oder eine spezifische Fahrunterstützung durchführt, wobei
wenn die Informationen über ein automatisiertes Fahren anzeigen, dass das automatisierte Fahren oder die spezifische Fahrunterstützung durchgeführt wird, die Warneinheit (30B) periodisch eine Warnung ausgibt, basierend auf einer vorhergesagten Art der Fahrunterstützungswarnung.

7. Verfahren zum Analysieren einer Fahrtendenz, aufweisend:
einen Schritt zum Erfassen von biologischen Informationen zum Erfassen von biologischen Informationen über einen Fahrer;
einen Schritt zum Schätzen eines Erregungspegels eines Fahrers zum Schätzen eines Erregungspegels des Fahrers basierend auf den biologischen Informationen;
einen Schritt zum Ableiten eines Fahrzeugverhaltens zum Ableiten von Verhaltensinformationen, die ein Verhalten eines Fahrzeugs anzeigen;
einen Schritt zum Erzeugen einer Fahrunterstützungswarnung zum Erzeugen von Informationen über eine Fahrunterstützungswarnung, um zu veranlassen, dass eine Fahrunterstützungswarnung auftritt, basierend auf den Verhaltensinformationen; und
einen Schritt zum Analysieren einer Fahrtendenz zum
Verwalten, als Verlaufsinformationen, eines Verlaufs einer Fahrunterstützungswarnung in Bezug auf die Verhaltensinformationen in Verbindung mit dem Erregungspegel des Fahrers, basierend auf den Informationen über den Erregungspegel und den Informationen über die Fahrunterstützungswarnung, und
Analysieren einer Fahrtendenz des Fahrers basierend auf den Verlaufsinformationen zum Erfassen von Analyseinformationen.

## Revendications

1. Dispositif d'avertissement (1 ; 1A ; 1B) comprenant :
une unité pour acquérir des informations biologiques sur un conducteur (21) configurée pour acquérir des informations biologiques sur un conducteur ;
une unité pour estimer un niveau d'excitation d'un conducteur (22) configurée pour estimer un niveau d'excitation du conducteur sur la base des informations biologiques ;
une unité pour acquérir des informations sur un comportement d'un véhicule (23) configurée pour acquérir des informations sur un comportement indiquant un comportement d'un véhicule ; et
une unité d'avertissement (30 ; 30A ; 30B) configurée pour émettre un avertissement sur la base des informations sur un niveau d'excitation indiquant le niveau d'excitation et les informations sur le comportement, dans lequel
l'unité pour acquérir des informations sur un comportement d'un véhicule (23) comprend en outre une unité pour générer un avertissement de support de conduite (26) configurée pour générer des informations d'avertissement de support de conduite pour amener un avertissement de support de conduite à se produire sur la base des informations sur le comportement,
le dispositif d'avertissement (1 ; 1A ; 1B) comprend en outre une unité pour analyser une tendance de conduite (27) configurée pour
gérer, en tant qu'informations d'historique, un historique d'un avertissement de support de conduite par rapport aux informations sur le comportement en association avec le niveau d'excitation du conducteur, sur la base des informations sur le niveau d'excitation et des informations d'avertissement de support de conduite, et
analyser une tendance de conduite du conducteur sur la base des informations d'historique pour acquérir des informations d'analyse, et
l'unité d'avertissement (30 ; 30A ; 30B) émet un avertissement correspondant à la tendance de conduite sur la base des informations d'analyse.

2. Dispositif d'avertissement (1 ; 1A ; 1B) selon la revendication 1, dans lequel l'unité d'avertissement (30 ; 30A ; 30B) prédit une possibilité qu'un avertissement de support de conduite se produise par rapport au comportement du véhicule et un type de l'avertissement de support de conduite qui se produit, sur la base des informations d'analyse et des informations sur le niveau d'excitation sur le conducteur, et lorsqu'il est déterminé que l'avertissement de support de conduite est hautement susceptible de se produire, l'unité d'avertissement (30 ; 30A ; 30B) émet un avertissement vers le conducteur sur la base du type prédit de l'avertissement de support de conduite.

3. Dispositif d'avertissement (1A) selon la revendication 1 ou 2, comprenant en outre :
une unité de communication (7A) configurée pour effectuer une communication avec un terminal externe, dans lequel
l'unité d'avertissement (30A) comprend en outre une unité de transmission externe (31A) configurée pour transmettre les informations sur le niveau d'excitation sur le conducteur et des informations d'avertissement prédictives indiquant un avertissement de support de conduite prédit vers l'extérieur via l'unité de communication (7A), et
l'unité de transmission externe (31A) détermine une fréquence de transmission sur la base des informations sur le niveau d'excitation sur le conducteur.

4. Dispositif d'avertissement (1 ; 1A ; 1B) selon l'une quelconque des revendications 1 à 3, comprenant en outre :
une unité d'éclairage infrarouge (4) configurée pour émettre une lumière infrarouge vers un conducteur, dans lequel
l'unité pour acquérir des informations biologiques sur un conducteur (21) comprend en outre une unité de détection de ligne de visée de conducteur (211) configurée pour détecter une ligne de visée du conducteur.

5. Dispositif d'avertissement (1 ; 1A ; 1B) selon l'une quelconque des revendications 1 à 4, dans lequel l'unité d'avertissement (30 ; 30A ; 30B) calcule un cycle dans lequel un niveau d'excitation est réduit sur la base d'un historique des informations sur le niveau d'excitation sur le conducteur, et émet un avertissement à un moment basé sur le cycle.

6. Dispositif d'avertissement (1B) selon l'une quelconque des revendications 1 à 5, comprenant en outre :
une unité pour acquérir des informations de conduite automatisée (40B) configurée pour acquérir des informations de conduite automatisée indiquant si le véhicule est en train d'effectuer l'une d'une conduite automatisée et d'un support de conduite spécifique, dans lequel
lorsque les informations de conduite automatisée indiquent que l'une de la conduite automatisée et du support de conduite spécifique est en train d'être effectuée, l'unité d'avertissement (30B) émet périodiquement un avertissement sur la base d'un type prédit de l'avertissement de support de conduite.

7. Procédé d'analyse de tendance de conduite comprenant :
une étape pour acquérir des informations biologiques sur un conducteur ;
une étape pour estimer un niveau d'excitation d'un conducteur sur la base des informations biologiques ;
une étape pour dériver des informations sur un comportement d'un véhicule ;
une étape pour générer un avertissement de support de conduite pour générer des informations d'avertissement de support de conduite pour amener un avertissement de support de conduite à se produire sur la base des informations sur le comportement ; et
une étape pour analyser une tendance de conduite pour
gérer, en tant qu'informations d'historique, un historique d'un avertissement de support de conduite par rapport aux informations sur le comportement en association avec le niveau d'excitation du conducteur, sur la base des informations sur le niveau d'excitation et des informations d'avertissement de support de conduite, et
analyser une tendance de conduite du conducteur sur la base des informations d'historique pour acquérir des informations d'analyse.
